# EUROPÄISCHE PATENTSCHRIFT

(11) **EP 1 625 251 B1**
(45) Veröffentlichungstag und Bekanntmachung des Hinweises auf die Patenterteilung: **02.05.2007**
(21) Anmeldenummer: 03735409.9
(22) Anmeldetag: 16.05.2003
(51) Int. Cl.: D06F 39/00, A47L 15/42, G01N 21/53

(54) **VORRICHTUNG FÜR EINE SENSOREINHEIT ZUR ERFASSUNG OPTISCHER EIGENSCHAFTEN EINES MEDIUMS**
DEVICE FOR A SENSOR UNIT FOR DETECTING OPTICAL PROPERTIES OF A MEDIUM
DISPOSITIF POUR UNITE DE DETECTION POUR DETECTER DES PROPRIETES OPTIQUES D'UN MILIEU

(43) Veröffentlichungstag der Anmeldung: 15.02.2006
(73) Patentinhaber: emz-Hanauer GmbH & Co. KGaA, 92507 Nabburg (DE)
(72) Erfinder: SCHENKL, Johann, 92439 Bodenwöhr (DE); WILHELM, Georg, 92543 Guteneck (DE)
(74) Vertreter: von Hellfeld, Axel
(86) Internationale Anmeldenummer: PCT/EP2003/005194
(87) Internationale Veröffentlichungsnummer: WO 2004/101878

(56) Entgegenhaltungen:
- EP-A- 0 972 486
- EP-A- 1 180 344
- EP-A- 1 335 060
- DE-A- 19 626 203
- DE-U- 20 022 433
- US-A- 5 446 531
- US-A- 5 477 576
- US-B1- 6 464 798
- PATENT ABSTRACTS OF JAPAN vol. 015, no. 409 (C-0876), 18. Oktober 1991 (1991-10-18) & JP 03 168188 A (MATSUSHITA ELECTRIC IND CO LTD), 19. Juli 1991 (1991-07-19)

## Beschreibung

### Gebiet der Erfindung

Die vorliegende Erfindung betrifft eine Vorrichtung zur Anordnung einer Sensoreinheit mit optischen Komponenten zur Erfassung einer optischen Eigenschaft eines Mediums mit den Merkmalen des Oberbegriffs des Patentanspruchs 1. Eine solche Vorrichtung ist aus der US-B1-6 464 798 bekannt.

### Hintergrund der Erfindung

Sensoreinheiten zur Erfassung optischer Transmissionseigenschaften eines Mediums werden im Allgemeinen an einer Medium führenden Leitung so angeordnet, dass sich eine von der Sendeeinheit verwendete Strahlung durch das Medium ausbreiten kann. Wechselwirkungen der Strahlung auf ihrem Ausbreitungsweg durch das Medium werden ermittelt, um auf die Transmissionseigenschaften des Mediums zu schließen. Beispiele hierfür umfassen als Trübungssensoren bezeichnete Sensoreinheiten, die bei Haushaltsgeräten, wie zum Beispiel Waschmaschinen und Geschirrspülmaschinen, verwendet werden, um Verunreinigungen und/oder die Trübung verwendeter Reinigungsfluide zu ermitteln.

Die bei bekannten Ansätzen zur Anordnung von Sensoreinheiten zur Erfassung Transmissionseigenschaften eines Mediums in das Medium verwendenden Vorrichtungen sollen an dem Beispiel von bei Waschmaschinen und Geschirrspülmaschinen verwendeten Trübungssensoren erläutert werden.

Bei Waschmaschinen und Geschirrspülmaschinen gibt es eine Vielzahl verschiedener Konstruktionsformen, die jeweils spezielle Einbauverhältnisse definieren. Dies gilt insbesondere hinsichtlich von bei derartigen Maschinen verwendeten Fluid führenden Leitungen, an denen Trübungssensoren anzuordnen sind. Ebenso gibt es eine Vielzahl verschiedener Leitungsanschlüssen, zwischen denen Vorrichtungen zur Anordnung von Trübungssensoren befestigt werden sollen.

Dabei ist es zur Zeit erforderlich, in Abhängigkeit der jeweiligen Ausführung einer Leitung, an der ein Trübungssensor anzuordnen ist, oder abhängig von den jeweiligen Ausführungen von Leitungsanschlüssen, zwischen denen ein Trübungssensor angeordnet werden soll, jeweils entsprechend ausgeführte und ausgelegte, insbesondere typisierte Trübungssensoren zu verwenden.

### Aufgabe der Erfindung

Aufgabe der vorliegenden Erfindung ist es, diese Probleme des Standes der Technik zu lösen und insbesondere zu vermeiden, dass bei Anwendungen, die hinsichtlich zu erfassender optischer Eigenschaften eines Mediums vergleichbar sind, jeweils unterschiedliche Sensoreinheiten verwendet werden müssen.

### Kurzbeschreibung der Erfindung

Die Lösung dieser Aufgabe ist im Patentanspruch 1 gekennzeichnet. Vorteilhafte Ausgestaltungen der Erfindung sind in den abhängigen Ansprüchen beschrieben.

Medien, die zur Verwendung bei der vorliegenden Erfindung verwendet werden können, umfassen Prozessfluide, Prozessgase, Gas-Fluid-Mischungen, Gas-Fluid-Gemenge, zum Waschen und/oder Reinigen verwendete Flüssigkeiten - insbesondere Wasser - eventuell mit darin enthaltenen Wasch- und/oder Reinigungssubstanzen, Ölen, Gasblasen, etc. für zum Beispiel Wäsche oder Geschirr und zum Trockenen verwendete Gase - insbesondere erwärmte Luft - eventuell mit darin enthaltenen Stäuben, Partikeln, Flusen, Stoffresten für zum Beispiel Stoffe und Gewebe umfassende Produkte.

Um unterschiedliche optische Eigenschaften zu erfassen und/oder dies für unterschiedliche Medien durchzuführen, also unterschiedliche Einsatzbereiche abzudecken, ist es im Allgemeinen erforderlich, entsprechende Sensoreinheiten einzusetzen. Dies war bisher aber auch erforderlich, wenn mit einer Sensoreinheit eine bestimmte optische Eigenschaft eines bestimmten Mediums, aber in Vorrichtungen unterschiedlicher Bauform ermittelt werden soll, also unterschiedliche Anwendungen realisiert werden sollten. Solche anwendungsspezifischen Sensoreinheiten sind bei Verwendung der vorliegenden Erfindung nicht erforderlich.

Optische Eigenschaften eines Mediums umfassen dessen Transmissionscharakteristika, Reflexionscharakteristika und Streucharakteristika.

Die zweiteiligen Ausführung des Anschlusshauptkörpers ermöglicht es, die ersten und zweiten Anschlusskörper insbesondere hinsichtlich damit zu verbindender Leitungen anwendungsspezifisch auszugestalten, ohne dass anwendungsabhängig, insbesondere hinsichtlich der Bauform unterschiedlicher Maschinen oder Geräte, bei denen wenigstens eine optische Eigenschaft eines Mediums erfasst werden soll, erforderlich ist, unterschiedliche Sensoreinheiten zu verwenden. Vielmehr erlaubt es die vorliegende Erfindung, unabhängig von der jeweiligen Anwendung innerhalb eines Einsatzbereichs, zum Beispiel der Erfassung der Verunreinigung oder Trübung eines Fluids oder Gases, die jeweiligen Anwendungen ein und dieselbe Sensoreinheit zu verwenden.

Der Kanal kann einen kreisförmigen, ovalen, rechteckigen oder mehreckigen Querschnitt aufweisen, der sich in Längsrichtung des Kanals ändern kann. So ist es beispielsweise vorgesehen, einen kreisförmigen oder ovalen Querschnitt zu verwenden, der im Bereich der ersten und zweiten Anschlusskörper im Wesentlichen konstant ist und sich im Bereich des Anschlusshauptkörpers gleichmäßig, ungleichmäßig, gestuft und dergleichen vergrößert.

Gemäß bevorzugter Ausführungsformen ist die erfindungsgemäße Vorrichtung für Fluide und insbesondere für in Waschmaschinen oder Geschirrspülmaschinen verwendete Prozessfluide vorgesehen, wobei bei diesen Ausführungsformen der Kanal, die Befestigungseinheit, der erste Anschlusskörper und der zweite Anschlusskörper entsprechend ausgeführt sind.

Prozessfluide umfassen einzelne Fluide und mehrere vermischte oder vermengte Fluide, das bzw. die beim entsprechenden Arbeitsprozess anfallende Feststoffe, Partikel, Verunreinigungen und dergleichen und/oder Gase, Gaseinschlüsse und Gasblasen aufweisen können. Bei Waschmaschinen und Geschirrspülmaschinen können Prozessfluide beispielsweise Wasser, Wasch- bzw. Spülmittel und beim Wasch- bzw. Reinigungsprozess anfallende Feststoffe oder Partikel, wie z.B. von Kleidung entfernter Schmutz bzw. Speisereste, umfassen.

Gemäß weiterer bevorzugter Ausführungsformen ist die erfindungsgemäße Vorrichtung für Gase und insbesondere für in Wäschetrocknern verwendete Luft vorgesehen, wobei bei diesen Ausführungsformen der Kanal, die Befestigungseinheit, der erste Anschlusskörper und der zweite Anschlusskörper entsprechend ausgeführt sind. Bei der Erfindung verwendbare Gase können auch Feststoffe, Partikel, und dergleichen und/oder Fluidpartikel, Tröpfchen und dergleichen umfassen.

Vorzugsweise ist ein erster, von dem ersten Anschlusskörper umfasster Anschlussbereich des ersten Anschlusskörper oder ist ein zweiter, von dem zweiten Anschlusskörper umfasster Anschlussbereich oder sind beide Anschlussbereiche abhängig von der daran anzuschließenden Leitung geformt, wobei der Anschlusshauptkörper im Bereich der Befestigungseinheit für die Sensoreinheit wenigstens eine anschlussbereichsunabhängige Messstrecke definiert. Unter anschlussbereichsunabhängig ist zu verstehen, dass die Messstrecke oder jeder der Messstrecken nicht durch die Abmessungen und/oder Formen des bzw. der Anschlussbereiche beeinflusst ist, sondern unabhängig davon konstant ist. So ist es beispielsweise möglich Anschlussbereiche unterschiedlichen Querschnitts, unterschiedlicher Länge, unterschiedlicher Verbindungsarten mit daran anzuschließenden Leitungen (z.B. Schraub-, Steck-, Klemmverbindungen etc.) und/oder unterschiedlichen Materials und sich im Wesentlichen geradlinig erstreckende, gekrümmte, gebogene und /oder gewinkelte Anschlussbereiche zu verwenden, ohne dabei die Messstrecke(n) zu beeinflussen. Unter Messstrecke ist hier nicht nur ein Abstand oder eine Länge zu verstehen. Vielmehr wird mit dem Begriff Messstrecke die Übertragungseigenschaft dieses Abstandes bzw. der Länge hinsichtlich der Sensoreinheit.

Insbesondere ist es vorgesehen, dass der Anschlusshauptkörper wenigstens zwei unterschiedliche anschlussbereichsunabhängige Messstrecken definiert.

Bei einer bevorzugten Ausführungsform weist der zweite Anschlusskörper einen Messbereich auf, der die wenigstens eine Messtrecke definiert, wobei es vorgesehen ist, dass die Befestigungseinheit den Messbereich umfassend angeordnet ist. Der Messbereich umfasst wenigstens den oder die Bereiche, durch dem bzw. die sich von der Sensoreinheit verwendete Strahlung ausbreiten soll, kann aber auch den gesamten Bereich des zweiten Anschlusskörpers umfassen, in dem die Befestigungseinheit angeordnet ist.

Vorzugsweise ist die wenigstens eine Messstrecke so definiert, dass sie in einem Winkel zur Längsrichtung des Kanals verläuft, sich also nicht parallel zu diesem erstreckt. Insbesondere wird dabei bevorzugt, dass die wenigstens eine Messstrecke mit der Längsrichtung des Kanals einen Winkelbereich zwischen 60° und 120° und insbesondere einen Winkel von 90° einschließen. Diese Ausführungsform hat den Vorteil, dass bei der Erfassung der wenigstens einen optischen Eigenschaft des Mediums verwendete Komponenten, wie z.B. Sender und Empfänger für optische Messstrahlung, außerhalb des Kanals angeordnet werden können.

Alternativ ist es möglich, die wenigstens eine Messstrecke parallel zur Längsrichtung des Kanals verlaufend zu definieren. Diese Ausführungsform kann bei verschiedenen Anwendungen von Vorteil sein. Dabei ist zu beachten, dass es im Allgemeinen erforderlich ist, beim Erfassen der wenigstens einen optischen Eigenschaft des Mediums verwendete Komponenten, wie z.B. Sender und Empfänger für optische Messstrahlung, im Kanal anzuordnen.

Anwendungsabhängig kann der erste Anschlussbereich einen ersten Außendurchmesser aufweisen, der kleiner als die Länge der Kürzesten der wenigstens einen Messtrecke ist, und/oder kann der zweite Anschlussbereich einen zweiten Außendurchmesser aufweisen, der kleiner als die Länge der Kürzesten der wenigstens einen Messtrecke ist.

Dabei ist es vorgesehen, dass der erste Außendurchmesser und der zweite Außendurchmesser gleich groß sind oder der erste Außendurchmesser größer als der zweite Außendurchmesser ist oder der erste Außendurchmesser kleiner als der zweite Außendurchmesser ist.

Bei einer bevorzugten Ausführungsform ist der Durchmesser des sich durch den ersten Anschlussbereich erstreckenden Teils des Kanals kleiner als der Durchmesser des übrigen Teils des Kanals.

Vergleichbar dazu kann der Durchmesser des sich durch den zweiten Anschlussbereich erstreckenden Teils des Kanals kleiner als der Durchmesser des Teils des Kanals sein, der sich bis von dem zweiten Anschlussbereich zu dem ersten Anschlussbereich erstreckt.

Anwendungsspezifisch kann es vorteilhaft sein, wenn der erste Anschlussbereich und/oder der zweite Anschlussbereich gekrümmt ist.

Um die Anschlusskörper mit einander zu verbinden, kann der erste Anschlusskörper eine erste Verbindungsstruktur und der zweite Anschlusskörper eine zweite Verbindungsstruktur zur Wirkverbindung mit der ersten Verbindungsstruktur aufweisen. Hierbei ist bevorzugt, dass die Verbindungsstrukturen für eine hinsichtlich eines zu verwendenden Mediums dichten Verbindung zwischen den Anschlusskörpern sorgt. Dies kann beispielsweise eine gas- und/oder eine fluiddichte Verbindung sein.

Bei einer bevorzugten Ausführungsform ist der wenigstens eine Messbereich zwischen der zweiten Verbindungsstruktur und dem zweiten Anschlussbereich angeordnet.

Falls ist nicht vorgesehen oder möglich ist, den Anschlusshauptkörper und insbesondere den zweiten Anschlusskörper insgesamt so auszuführen, dass er für von der Sensoreinheit verwendete Strahlung durchlässig ist, ist der Anschlusshauptkörper bzw. der zweite Anschlusskörper wenigstens in den Bereichen, die die wenigstens eine Messstrecke definieren, für zu verwendende Strahlung durchlässig. Bei der vorliegenden Erfindung verwendbare Strahlung umfasst sichtbares Licht, infrarotes Licht, ultraviolettes Licht, Laserlicht, wenigstens zwei unterschiedliche vorgegebene Wellenlängen aufweisende Strahlung, etc.

Bei Verwendung von mehr als einer Messstrecke können für wenigstens eine der Messstrecken im Kanal im Bereich dieser Messstrecke(n) eine Struktur oder, in Abhängigkeit der in Frage stehenden Messstrecken, mehrere Strukturen angeordnet sein, um diese Messstrecke(n) einzustellen. Hierfür können Strukturen verwendet werden, die zwar nicht die Länge(n) der in Frage stehenden Messstrecke(n), wohl aber deren Übertragungseigenschaft(en) beeinflussen. Allerdings ist es hier auch möglich, die Länge(n) der in Frage stehenden Messstrecke(n) durch die Struktur(en) zu steuern.

Die Vorteile der vorliegenden Erfindung werden in besonderem Maß genutzt, wenn der Anschlusshauptkörper aus gespritztem Kunststoff hergestellt wird.

Gemäß einem weiteren Aspekt der Vorrichtung verschließt bzw. dichet ein deckelartiger Bereich der Halterung den Aufnahmeraum hinsichtlich wenigstens einer Umgebungseinflussgröße wenigstens teilweise ab.

Auch diese erfindungsgemäße Lösung verwendet eine zweiteilige Vorrichtung, die Anordnung einer Sensoreinheit zur Erfassung wenigstens einer optischen Eigenschaft eines Mediums vereinfacht und die Anzahl der dabei erforderlichen Komponenten reduziert. Insbesondere wird durch den deckelartigen Bereich die Verwendung zusätzlicher Komponenten vermieden, die bisher notwendig waren, um die Sensoreinheit zu schützen. Ein weiterer Vorteil ist, dass die Abdichtung bzw. der Verschluss des Aufnahmeraums automatisch und zwangsläufig bei der Anordnung der Sensoreinheit erfolgt, da sie dazu an der an der Halterung anzubringen ist, die dann für den Verschluss sorgt.

Unter Verschließen bzw. Abdichten durch den Deckel wird im Folgenden insbesondere verstanden, dass der Deckel so mit der Befestigungseinheit zusammenwirkt, dass Beschädigungen der Sensoreinheit und Beeinträchtigungen beim Betrieb derselben durch Umgebungseinflüsse verhindert werden. Hierbei ist es vorgesehen, dass der Verschluss hinsichtlich wenigstens einer Umgebungseinflussgröße erfolgt. Beispiele für eine Umgebungseinflussgröße umfassen Staub, Partikel, Schmutz, Feuchtigkeit, Gase, Fluide und dergleichen.

In Abhängigkeit davon, welcher Schutz mit dem deckelartigen Bereich erreicht werden soll, kann der deckelartige Bereich vergleichbar zu einem Filter, beispielsweise in Form eines Gitters, ausgestaltet sein, um ein Eindringen von Objekten vorbestimmter Größe in den Aufnahmeraum zu verhindern.

Insbesondere ist bevorzugt, dass der deckelartige Bereich wenigstens einen oder mehrere Bereiche des Aufnahmeraums, in dem optische Komponenten der Sensoreinheit anzuordnen sind, hinsichtlich der wenigstens einen Umgebungseinflussgröße vollständig verschließt oder abdichtet.

Bei einer bevorzugten Ausführungsform verschließt der deckelartige Bereich den Aufnahmeraum vollständig. Diese bevorzugte Ausführungsform kann beispielsweise eingesetzt werden, wenn die Sensoreinheit drahtlos Signale empfangen und/oder senden kann, wie zum Beispiel Steuersignale und Messungen angebende Signale.

Falls die Sensoreinheit zum Betrieb eine drahtgebundene Verbindung erfordert, kann der vollständige Abschluss des Aufnahmeraums erreicht werden, indem der deckelartige Bereich mit einer Öffnung zur Aufnahme eines entsprechenden Steckers zum elektrischen Anschluss der Sensoreinheit versehen ist und die Öffnung im zusammengebauten Zustand, also wenn der Stecker in der Öffnung angeordnet ist, in Wirkverbindung mit dem Stecker für die gewünschte Abdichtung hinsichtlich der wenigstens einen Umgebungseinflussgröße sorgt.

Im Sinne einer "Komplettlösung" kann die erfindungsgemäße Vorrichtung einen Stecker zur elektrischen Verbindung der Sensoreinheit umfassen, wobei es auch hier vorgesehen ist, dass der deckelartige Bereich eine Öffnung zur Aufnahme des Steckers aufweist und Öffnung und der in der Öffnung aufgenommene Stecker den Aufnahmeraum hinsichtlich der wenigstens einen Umgebungseinflussgröße vollständig verschließen/abdichten.

Gemäß bevorzugter Ausführungsformen ist die erfindungsgemäße Vorrichtung für Fluide und insbesondere für in Waschmaschinen oder Geschirrspülmaschinen verwendete Prozessfluide vorgesehen, wobei bei diesen Ausführungsformen die Befestigungseinheit, die Halterung und der deckelartige Bereich entsprechend ausgeführt sind.

Gemäß weiterer bevorzugter Ausführungsformen ist die erfindungsgemäße Vorrichtung für Gase und insbesondere für in Wäschetrocknern verwendete Luft vorgesehen, wobei bei diesen Ausführungsformen die Befestigungseinheit, die Halterung und der deckelartige Bereich entsprechend ausgeführt sind.

Vorzugsweise ist die Halterung mittels einer oder mehrere Schnapp- oder Rastverbindung in dem Aufnahmeraum gesichert. Hierfür kann beispielsweise der deckelartige Bereich an seinem Außenumfang mit einer Schnapp- oder Rastkante ausgestattet sein.

Bei einer bevorzugten Ausführungsform sind ferner Halter vorgesehen, optische Komponenten der Sensoreinheit, in dem Aufnahmeraum zu befestigen. Beispiele für solche optischen Komponenten umfassen insbesondere Sender und Empfänger für optische Messstrahlung, beispielsweise in Form von Fotodioden, Fototransistoren, Solarzellen, etc. Hierbei ist es vorgesehen die Halter im Inneren der Befestigungseinrichtung oder an der Halterung anzuordnen.

Die Halter zur Befestigung optischer Komponenten der Sensoreinheit können auch als Blenden dienende Bereiche umfassen.

Weitere von der vorliegenden Erfindung bereitgestellte Vorrichtungen und Verwendungen sind in den Ansprüchen 33 bis 45 definiert.

### Kurzbeschreibung der Figuren

In der folgenden Beschreibung bevorzugter Ausführungsformen wird auf die beigefügten Figuren Bezug genommen, von denen zeigen:
- Fig. 1 und 2: schematische Darstellungen einer bevorzugten Ausführungsform einer erfindungsgemäßen Vorrichtung zum Anordnen einer Sensoreinheit zur Erfassung wenigstens einer optischen Eigenschaft eines Mediums,
- Fig. 3 bis 8: schematische Darstellungen weiterer bevorzugter Ausführungsformen einer erfindungsgemäßen Vorrichtung zum Anordnen einer Sensoreinheit zur Erfassung wenigstens einer optischen Eigenschaft eines Mediums,
- Fig. 9 bis 15: schematische Darstellungen bevorzugter Ausführungsformen der erfindungsgemäßen Vorrichtung mit zwei Messstrecken,
- Fig. 16: eine schematische Darstellung einer bevorzugten Ausführungsform der erfindungsgemäßen Vorrichtung mit verdoppelter Messstrecke, und
- Fig. 17 und 18: schematische Darstellungen bevorzugter Ausführungsformen des Kanals von Fig. 1 bis 3.

### Beschreibung bevorzugter Ausführungsformen

Im Folgenden werden ausschließlich zur Veranschaulichung Ausführungsformen beschrieben, die zur Verwendung bei einer Waschmaschine oder einer Geschirrspülmaschine vorgesehen sind. Dementsprechend wird nachfolgend auf eine optische Sensoreinheit (kurz Trübungssensor) zur Erfassung optischer Eigenschaften dort verwendeter Prozessfluide (kurz Fluide) als Sensoreinheit bzw. Medium im Sinn der vorliegenden Erfindung Bezug genommen. Optische Eigenschaften umfassen hierbei insbesondere die optische Transmission oder Trübung und Streuung von Prozessfluiden und Reflexionen und Streuungen optischer Messstrahlung bei Ausbreitung durch Prozessfluide.

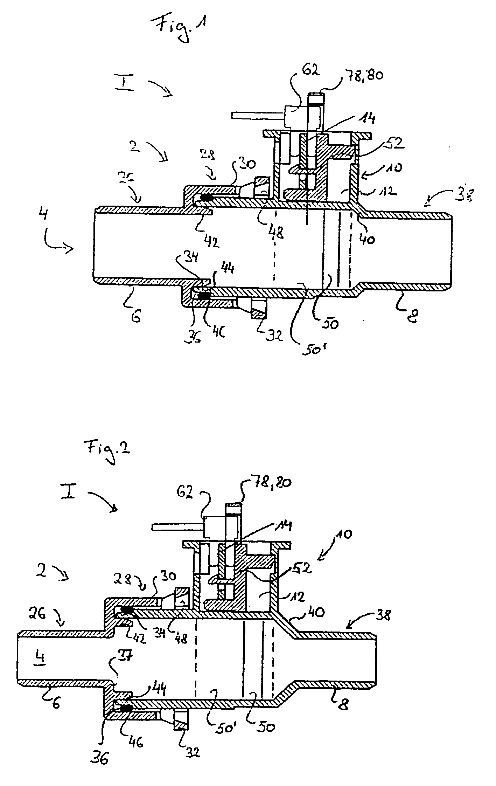

Die in Fig. 1 und 2 dargestellte Ausführungsform umfasst eine Vorrichtung I zur Anordnung eines Trübungssensors einen Anschlusshauptkörper 2 mit einem Kanal 4, der sich in Längsrichtung des Anschlusshauptkörpers 2 vollständig durch diesen hindurch erstreckt.

Der Anschlusshauptkörper 2 umfasst einen ersten Anschlusskörper 6 und einen zweiten Anschlusskörper 8, die mit einander verbunden sind. Der erste Anschlusskörper 6 dient zum Anschluss der Vorrichtung I an eine Leitung (nicht gezeigt) einer Waschmaschine oder Geschirrspülmaschine, um Prozessfluide derselben der Vorrichtung I zuzuführen. Der zweite Anschlusskörper 8 dient zum Anschluss der Vorrichtung I an eine Leitung (nicht gezeigt) der Waschmaschine oder Geschirrspülmaschine, um durch den Kanal 4 befördertes Prozessfluid aufzunehmen und von der Vorrichtung I abzuführen.

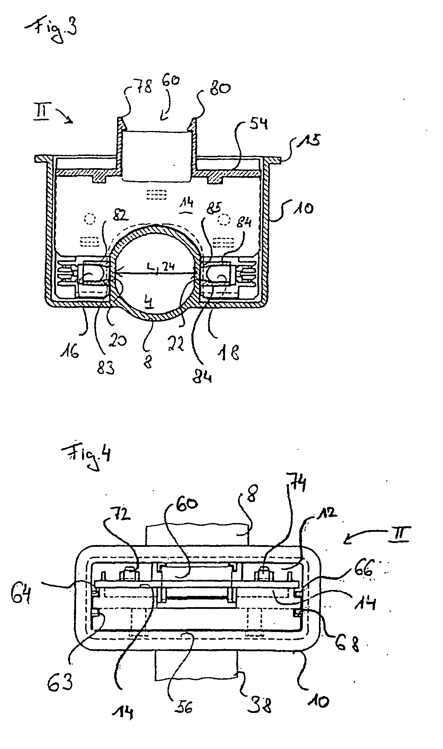

Der Anschlusshauptkörper 2 weist eine unter Bezugnahme auf Fig. 3 bis 6 detaillierter beschriebene Befestigungseinheit 10 auf, die einen Raum 12 zur Aufnahme eines Trübungssensors (nicht bezeichnet) definiert. Der hier gezeigte Trübungssensor umfasst eine Platine 14 mit entsprechenden elektrischen, elektronischen, optoelektronischen und/oder optischen Komponenten und weitere im Folgenden beschriebenen Bauteilen.

Wie in Fig. 3 dargestellt, weist die Befestigungseinheit 10 zwei Schenkel (nicht bezeichnet) auf, die den Anschlusshauptkörper 2 im Bereich des zweiten Anschlusskörpers 8 teilweise, gabelartig umfassen. An seiner in Figur 3 oben dargestellten Seite weist die Befestigungseinheit 10 einen sich gewinkelt nach außen erstreckenden, umlaufenden Bereich 15 auf, der als Tropfschutz dient. Insbesondere wird mittels des Bereichs 15 Eindringen von Fluiden in den Aufnahmeraum 12 verhindert, wenn die Befestigungseinheit 10 mit ihrem in Figur 3 unten dargestellten Ende nach oben eingebaut wird.

Bei dem in den Figuren dargestellten zusammengebauten Zustand, ist der Trübungssensor in der Befestigungseinheit 10 angeordnet. Der Trübungssensor erfasst mittels einem Licht aussendenden Sender 16 und einem Empfänger 18 zum Empfang von Licht des Senders 16 die Trübung eines Fluids, das sich in dem Kanal 4 befindet oder diesen durchströmt. Der Sender 16 und der Empfänger 18 sind einander gegenüberliegend jeweils in einem Schenkel der Befestigungseinheit 10 angeordnet. Damit sich Licht des Senders 16 zu dem Empfänger 18 ausbreiten kann, weist der zweite Anschlusskörper 8 wenigstens in den dem Sender 16 und dem Empfänger 18 gegenüberliegenden Bereichen eine transparente Bewandung, beispielsweise in Form von Fenstern 20 und 22, auf. Alternativ kann der zweite Anschlusskörper insgesamt aus einem transparenten Material hergestellt sein. Auch wenn es nicht erforderlich ist, dass der erste Anschlusskörper 6 für Licht des Senders 16 transparent ist, ist es vorteilhaft, den ersten Anschlusskörper 6 auch aus dem für den zweiten Anschlusskörper 8 verwendeten Material herzustellen, um ein einheitliches Erscheinungsbild des Anschlusshauptkörpers 2 zu erreichen und dessen Herstellung zu vereinfachen.

Da der Sender 16 und der Empfänger 18 im Wesentlichen unmittelbar an der Außenseite des zweiten Anschlusskörpers angeordnet sind, wird durch den Außendurchmesser des ersten Anschlusskörpers 8 in diesem Bereich eine Länge L einer Messstrecke 24 für den Trübungssensor definiert.

Unter der Messstrecke ist hier nicht nur der Abstand zwischen dem Sender 16 und dem Empfänger 18 bzw. die diesem entsprechende Länge L zu verstehen. Vielmehr wird mit dem Begriff Messstrecke die Übertragungseigenschaft dieses Abstandes bzw. der Länge L für Licht des Senders 16 auf ihrem Weg zu dem Empfänger 18 bezeichnet. Die Messstrecke L wird also nicht nur von diesem Abstand bzw. der Länge L, sondern auch von weiteren Größen beeinflusst, wie zum Beispiel der Wanddicken des zweiten Anschlusskörpers 8 in diesem Bereich und in dem Kanal 4 vorhandenes Prozessfluid.

Der erste Anschlusskörper 6 weist einen ersten Anschlussbereich 26 auf, der beispielsweise mittels einer Rohrschelle, Federelementen etc. mit einer Fluid zuführenden Leitung verbunden werden kann. Zu dem ersten Anschlussbereich 26 benachbart weist der erste Anschlusskörper 6 eine erste Verbindungsstruktur 28 auf.

Die Verbindungsstruktur 28 umfasst einen bezüglich der Längsrichtung des Kanals 4 umlaufenden Flansch 30, der an seinem freien Ende 32 für eine Rast- oder Schnappverbindung ausgestaltet ist. Die erste Verbindungsstruktur 28 umfasst ferner einen relativ zu dem Flansch 30 radial nach innen versetzten Flansch 34, der sich im Wesentlichen parallel zu dem Flansch 30 erstreckt. Die dargestellte Länge des Flansches 34 ist lediglich beispielhaft zu verstehen; der Flansch 34 kann auch die gleiche Länge wie der Flansch 30 aufweisen oder sich bis zu dem Bereich erstrecken, wo die Befestigungseinheit 10 angeordnet ist.

Die Flansche 30 und 34 bilden eine Aufnahme 36 für ein Ende des zweiten Anschlusskörpers 8. An seinem freien Ende weist der Flansch 34 eine bezüglich seiner Längsrichtung schräg verlaufende Fläche auf, um die Aufnahme des zweiten Anschlusskörper 8 zu erleichtern.

Der Übergang zwischen dem Flansch 34 und dem ersten Anschlussbereich 26 wird durch die Abmessungen und die Form des ersten Anschlussbereichs 26 bestimmt. Der erste Anschlussbereich 26 wir anwendungsspezifisch, in Abhängigkeit von einer damit zu verbindenden Fluid zuführenden Leitungen gestaltet, während die übrigen Bereiche des ersten Anschlusskörpers 6 anwendungsunabhängig konstante Abmessungen und Formen aufweisen. So geht beispielsweise bei der in Fig. 1 gezeigten Ausführungsform die Innenfläche (nicht bezeichnet) des ersten Anschlussbereichs 26 "nahtlos" in die Innenfläche des Flansches 34 über. Demgegenüber ergibt sich bei der Ausführungsform von Fig. 2 im Übergang zwischen dem Flansch 34 und dem ersten Anschlussbereich 26 auf Grund des kleineren Durchmessers des ersten Anschlussbereichs 26 eine Stufe 37.

Der zweite Anschlusskörper 8 weist einen zweiten Anschlussbereich 38 auf, der mit der Fluid abführenden Leitung vergleichbar zu dem ersten Anschlussbereich 26 verbunden werden kann. Der zweite Anschlusskörper 8 weist zwischen dem zweiten Anschlussbereich 38 und dem Bereich, in dem die Befestigungseinheit 10 angeordnet ist, einen bezüglich der Längsachse der Vorrichtung schräg verlaufenden Übergang 40 auf. Die Abmessungen des Anschlusshauptkörper 2 werden abgesehen von den ersten und zweiten Anschlussbereichen 26 und 38 anwendungsunabhängig beibehalten. Daher wird die Länge des Übergangs 40 nicht durch die Abmessungen des zweiten Anschlusskörpers 8 im Bereich der Befestigungseinheit 10, sondern durch die anwendungsspezifischen Abmessungen und Formen des zweiten Anschlussbereichs 38 bestimmt. Dies wird durch einen Vergleich von Fig. 1 und 2 veranschaulicht, wo sich auf Grund unterschiedlicher Durchmesser der zweiten Anschlussbereiche 38 unterschiedliche Übergänge 40 ergeben.

Das Ende 42 des zweiten Anschlusskörpers 8, das dem Ende mit dem zweiten Anschlussbereich 38 gegenüber liegt, weist eine radial außen liegende umlaufende Fase 44 zur Aufnahme einer Dichtung 46 auf. Die Dichtung 46 sorgt für einen fluiddichten Verschluss zwischen dem Flansch 30 des ersten Anschlusskörpers 6 und dem Ende 42 des zweiten Anschlusskörpers 8. Die Dichtung 46 kann beispielsweise einen O-Ring umfassen.

Zur Befestigung der ersten und zweiten Anschlusskörper 6 und 8 miteinander weist der zweite Anschlusskörper 8 eine zweite Befestigungsstruktur 48 auf, die entsprechend der ersten Befestigungsstruktur 28 und insbesondere deren Ende 32 zur Rast- oder Schnappverbindung geformt ist. Alternativ können die ersten und zweiten Befestigungsstrukturen 28 und 48 einen Bajonettverschluss zur Verbindung der ersten und zweiten Anschlusskörper 6 und 8 bereitstellen. Alternativ zu der Verwendung der ersten und zweiten Verbindungsstrukturen ist es möglich, den ersten Anschlusskörper 6 und den zweiten Anschlusskörper 8 beispielsweise zu verschweißen oder zu verkleben. Die Verwendung von Kodierungen bereitstellenden Strukturen an den Anschlusskörpern 6 und 8 stellt sicher, dass diese beim Zusammenbau korrekt zu einander positioniert werden.

Der Bereich des zweiten Anschlusskörpers 8, an dem die Befestigungseinheit 10 angeordnet bzw. der von der Befestigungseinheit 10 umfasst ist, stellt einen Messbereich 50 dar. Wie eingangs ausgeführt, umfasst der Messbereich 50 wenigstens den Bereich, in dem sich von dem Trübungssensor verwendete Strahlung beim Betrieb ausbreitenden soll. Dies ist in Fig. 1 und 2 durch die durchgängigen Linien angedeutet, die den Messbereich 50 begrenzen. Wie ebenfalls eingangs ausgeführt, kann der Messbereich aber durchaus auch einen größeren Bereich umfassen, was in Fig. 1 und 2 durch die gestrichelten Linien angedeutet ist, die einen Messbereich 50' begrenzen.

Insbesondere ist unter dem Messbereich 50 der Bereich zu verstehen, der sich zwischen der Außenseite des zweiten Anschlusskörpers 8, die dem Sender 16 gegenüber liegt, und der Außenseite des zweiten Anschlusskörpers 8 erstreckt, die dem Empfänger 18 gegenüber liegt. Wie oben ausgeführt, definiert aufgrund der Anordnung des Senders 16 und des Empfängers 18 der Außendurchmesser des Messbereichs 50 die Länge L der Messstrecke 24 und zusammen mit den Wanddicken des zweiten Anschlusskörpers 8 in diesem Bereich die Messstrecke 24.

Wie sich aus einem Vergleich von Fig. 1 und Fig. 2 ergibt, ist der zweite Anschlusskörper 8 im Messbereich 50 so gestaltet, dass dessen Außendurchmesser und dessen Wanddicken und damit die Messstrecke 24 unabhängig davon gleich sind, welche Durchmesser die ersten und zweiten Anschlussbereiche 26 und 38 aufweisen. Dies hat den Vorteil, dass unabhängig davon, welche Abmessungen Fluid zuführende Leitung und Fluid abführende Leitungen aufweisen, die Messstrecke 24 konstant ist.

Folglich kann unabhängig von Fluid zuführenden und abführenden Leitungen und unabhängig von den entsprechend zu gestaltenden ersten und zweiten Anschlussbereichen 26 und 38 der gleiche Trübungssensor verwendet werden. Dies ist nicht nur darauf zurückzuführen, dass sich die Abmessungen der Vorrichtung I im Bereich, wo der Trübungssensor anzuordnen ist, nicht ändern und dementsprechend auch keine Änderungen der Abmessungen des Trübungssensors erforderlich sind, sondern auch, weil die Messstrecke 24 nicht geändert wird. Eine Änderung der Messstrecke 24 hätte nämlich zur Folge, dass der Trübungssensor entsprechend typisiert werden müsste. Dies wird durch die vorliegende Erfindung verhindert.

Daher ist auch nicht möglich, die Eigenschaften der Vorrichtungen I zu erreichen, indem ein einstückiger Anschlusshauptkörper mit einem Kanal konstanten Innendurchmessers verwendet wird. Dies hätte nämlich zur Folge, dass sich in Abhängigkeit der Abmessungen der Anschlussbereiche die Wanddicken im Bereich der Messstrecke ändern. Dies würde aber die Übertragungseigenschaften zwischen Dioden eines Trübungssensors und folglich auch die Messstrecke ändern.

Im Gegensatz zu dem Messbereich 50, dessen Abmessungen, wenigstens soweit es die Messstrecke 24 betrifft, konstant gehalten werden, können die ersten und zweiten Anschlussbereiche 26 und 38 so geformt sein, dass sie mit den entsprechenden Leitungen einer Waschmaschine oder einer Geschirrspülmaschine verbunden werden können.

Insbesondere ist es aufgrund der zweiteiligen Ausführung des Anschlusshauptkörpers 2 möglich, die Anschlussbereiche 26 und 38 mit kleineren Innendurchmessern herzustellen, als die übrigen Bereiche des Anschlusshauptkörpers 2. Die zweiteilige Ausführung des Anschlusshauptkörpers 2 erlaubt es, die ersten und zweiten Anschlusskörper 6 und 8 in separaten Vorgängen zu spritzen und dabei Innendurchmesser in den Anschlussbereichen 26 und 38 und dazwischen liegenden Bereichen zu realisieren, die bei einteiliger Ausführung nicht möglich sind.

Ein weiterer Vorteil der zweiteiligen Ausführung besteht darin, dass zur Herstellung der ersten und zweiten Anschlusskörper 6 und 8 jeweils nur ein Werkzeug erforderlich ist, die beim Spritzen der ersten und zweiten Anschlusskörper 6 und 8 mit entsprechenden Einlagen ausgestattet werden, um in Abhängigkeit von Fluid zuführenden bzw. abführenden Leitungen die Anschlussbereiche 26 und 38 zu gestalten. Ein weiterer Vorteil besteht darin, dass die zum Herstellen der ersten und zweiten Anschlusskörper 6 und 8 verwendeten Einsätze lediglich in den Bereichen modifiziert werden müssen, die zur Herstellung der ersten und zweiten Anschlussbereiche 26 und 38 dienen. Für die übrigen Bereiche der ersten und zweiten Anschlusskörper 6 und 8 sind demgegenüber keine Modifikationen der Werkzeuge bzw. der Einsätze erforderlich.

Des Weiteren ist es möglich, den Anschlussbereich 26 und/oder den Anschlussbereich 38 gekrümmt zu formen, um beispielsweise beim Einbau Platz zu sparen oder einen Einbau überhaupt erst zu ermöglichen.

Bezugnehmend auf Fig. 3 bis 6 wird die Befestigungseinheit 10 und weitere Komponenten detaillierter beschrieben, die zusammen eine Vorrichtung II zur Anordnung eines Trübungssensors bilden. Daher kann die Vorrichtung II auch als Trübungssensorhalter bezeichnet.

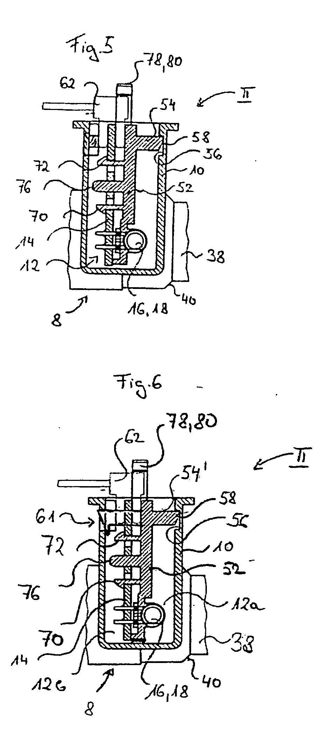

Zur Befestigung eines Trübungssensors, der hier eine entsprechende Platine 14 und den Sender 16 und den Empfänger 18 umfasst, wird eine Halterung 52 verwendet, die in dem Aufnahmeraum 12 der Befestigungseinheit 10 angeordnet und dort befestigt werden kann. Zur Befestigung weist die Halterung 52 an ihrem in Fig. 5 und 6 oben dargestellten Endbereich einen sich senkrecht zu der Darstellungsebene erstreckenden plattenähnlichen oder deckelähnlichen Bereich 54 auf.

Dieser im Folgenden als Deckel bezeichnete Bereich 54 ist an seinem Außenumfang vergleichbar zu einer Rastnase ausgebildet, die im zusammengebauten Zustand in eine Ausnehmung 56 der Befestigungseinheit 10 eingreift und in Wirkverbindung mit einer Anschlagfläche 58 der Ausnehmung 56 die Halterung 52 in der Befestigungseinheit 10 sichert. Die dargestellte Ausnehmung 56 ist in Form einer an der Innenseite (nicht bezeichnet) der Befestigungseinheit 10 Nut ausgeführt. Bei den dargestellten Ausführungsformen ist die Nut an der in Fig. 5 und 6 dargestellten Innenseite der Befestigungseinheit 10 angeordnet. Die Nut bzw. die Ausnehmung 56 kann auch an einer oder beiden dazu benachbarten Innenseiten der Befestigungseinheit 10 oder an den Innenseiten der Befestigungseinheit 10 umlaufend ausgeführt sein. Dies ermöglicht es, größere Bereiche des Außenumfangs des Deckels 54 oder diesen vollständig aufzunehmen. Hierbei ist es vorgesehen, dass die in die Ausnehmung 56 eingreifenden Bereiche des Außenumfangs des Deckels 54 vergleichbar zu einer Rastnase ausgebildet sind. Bei den dargestellten Ausführungsformen wird der dichte Verschluss zwischen den Bereichen des Außenumfangs des Deckels 54, die nicht in die Ausnehmung 56 eingreifen, durch Kraftschluss und gegebenenfalls eine geeignete Materialpaarung erreicht.

Der Deckel 54 weist eine in Fig. 4 dargestellte Öffnung 60 auf, durch die ein Leiterplattenstecker 62 zur elektrischen Verbindung mit der Platine 14 eingeführt werden kann. Abgesehen von der Öffnung 60 sorgt der Deckel 54 für einen dichten Verschluss des Aufnahmeraums 12, ohne dass hierfür weitere Komponenten erforderlich sind. Ist der Stecker, wie in Fig. 5 dargestellt, durch die Öffnung 60 eingeführt und mit dem in dieser Figur oben dargestellten Ende der Platine 14 verbunden, ist der Aufnahmeraum 12 dicht verschlossen, um zum Beispiel das Eindringen von Staub, Feuchtigkeit, etc. zu verhindern.

Die in Figur 6 dargestellte Ausführungsform unterscheidet sich von der in Figur 5 gezeigten dadurch, dass die Befestigungseinheit 10 eine Öffnung 61 aufweist, die beispielweise zur Fertigung der Ausnehmung 56 an der in Figur 6 rechts dargestellten Innenseite der Befestigungseinheit 10 dient. Um mittels der Halterung 52 die Öffnung 61 dicht zu verschließen, ist bei dieser Ausführungsform an der Halterung 52 ein Deckel 54' ausgeformt, der an seiner in Figur 6 links dargestellten Seite so dimensioniert ist, dass die Öffnung 61 im zusammengebauten Zustand dicht verschlossen ist. Insbesondere ist es hier vorgesehen, dass der Deckel 54' an diesem Ende vergleichbar zu einer Rastnase ausgebildet ist, um im zusammengebauten Zustand in die Öffnung 61 einzugreifen.

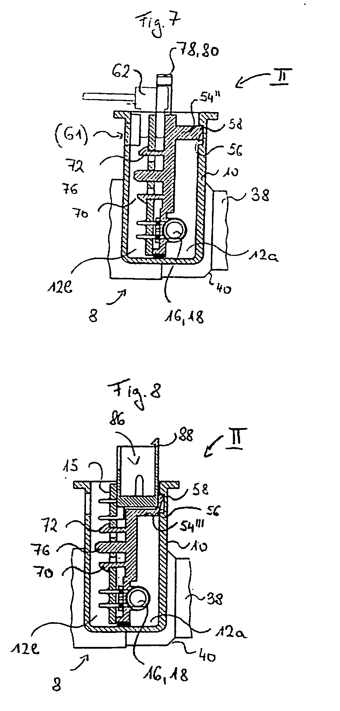

Unabhängig davon, ob die Befestigungseinheit 10 eine mit der Öffnung 61 vergleichbare Öffnung aufweist oder nicht, kann die in Figur 7 dargestellte Ausführungsform verwendet werden, wenn nur bestimmte Komponenten des Trübungssensors, wie zum Beispiel dessen Sender 16 und Empfänger 18 geschützt werden sollen. Bei dieser Ausführungsform weist die Halterung 52 einen Deckel 54" auf, der von dem Aufnahmeraum 12 einen Bereich 12a dicht verschließt, in dem der Sender 16 und der Empfänger 18 anzuordnen sind. Das Übrige des Aufnahmeraums 12, nämlich dessen Bereich 12b bleibt bei dieser Ausführungsform unverschlossen.

Die Befestigungseinheit 10 weist Führungen 63, 64, 66 und 68 auf, die zum geführten Einbringen der Halterung 52 dienen und diese relativ zu der Befestigungseinheit 10 und somit relativ zu dem der zweiten Anschlusskörper 8 ausrichten.

Die Halterung 52 umfasst mehrere Rast- oder Schnapphaken oder -nasen 70 bis 74, die zur Befestigung der Platine 14 dienen. Die Elemente 70 bis 74 sind entsprechend der Anordnung von Ausnehmungen, Aussparungen, Öffnungen und dergleichen (nicht bezeichnet) der Platine 14 angeordnet und verrasten die Platine 14 an der Halterung 52. Des Weiteren weist die Halterung 52 eine als Kodierung wirkende Führungsstruktur 76 auf, die das Anordnen der Platine 14 an der Halterung 52 erleichtert, indem sie mit einer entsprechenden Ausnehmung oder Öffnung (nicht bezeichnet) in der Platine 14 beim Zusammenbau zusammenwirkt und diesen ausrichtet, bevor die Elemente 70 bis 74 an der Platine 14 verrastend angreifen.

Die Öffnung 60 in dem Deckel 54 dient auch zur Führungen des Steckers 62 beim Verbinden mit der Platine 14. Um den mit der Platine 14 verbundenen Stecker 62 zu sichern, weist die Befestigungseinheit 10 Rasten, Sicherungshaken, Haltehaken oder dergleichen 78 und 80 auf, die in Fig. 3 deutlicher zu erkennen sind. Die Verwendung hier nicht gezeigter Kodierungen gewährleistet, dass der Stecker 62 korrekt eingesetzt wird.

Die Halterung 52 ist mit in Fig. 3 gezeigten Diodenhaltern 82 und 84 ausgestattet, die die Dioden 16 und 18 aufnehmen und ausrichten. Ferner ist es vorgesehen, dass bei Verwendung der Diodenhalter 82 und 84 diese in ihren dem zweiten Anschlusskörper 8 zugewandten Bereichen so gestaltet sind, dass sie für eine gewünschte Blendencharakteristik für den Sender 16 und den Empfänger 18 sorgen.

Bei der in Fig. 8 dargestellten Ausführungsform ist die Halterung 52 so gestaltet, dass eine Platine 15 verwendet werden kann, die an ihrem in dieser Figur oben dargestellten im Bereich baueinheitlich integriert einen Stecker 86 aufweist. Zur Sicherung eines damit zu verbindenden Anschlusses (nicht dargestellt) dient eine Raste 88, die an der Platine 15 ausgebildet ist. Bei dieser Ausführungsform weit die Halterung 52 einen Deckel 54"' auf, der für einen dichten Verschluss des Aufnahmeraums 12 in dem für den Sender 16 und den Empfänger 18 vorgesehenen Bereich 12a sorgt.

Bei den Ausführungsformen, bei denen der Deckel der Halterung 52 nur den Bereich 12a des Aufnahmeraums 12 verschließen, ist es vorgesehen, dass auch das in den Figuren untere Ende der Halterung 52 mit dem Boden (nicht bezeichnet) des Aufnahmeraums 12 so zusammenwirkt, dass auch in den Figuren von unten der Bereich 12a verschlossen ist.

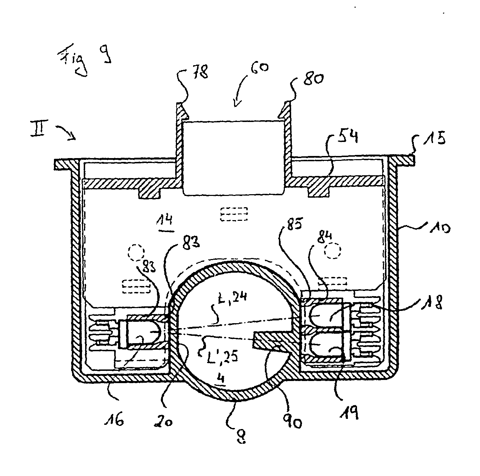

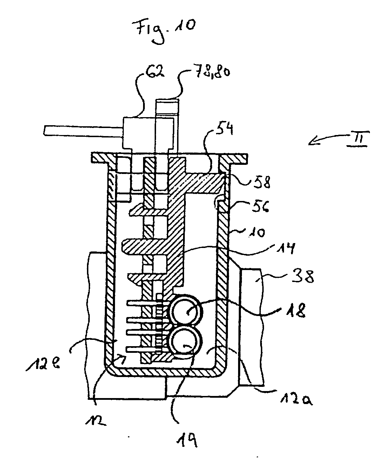

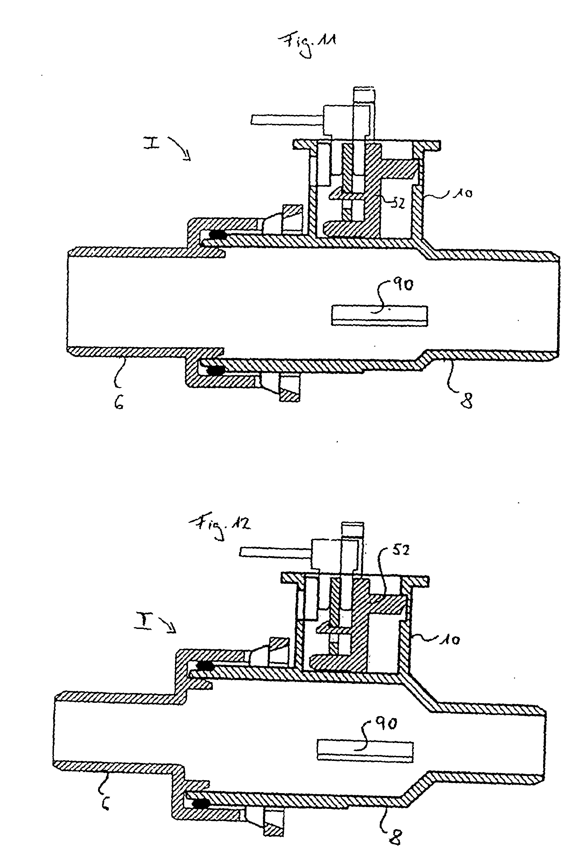

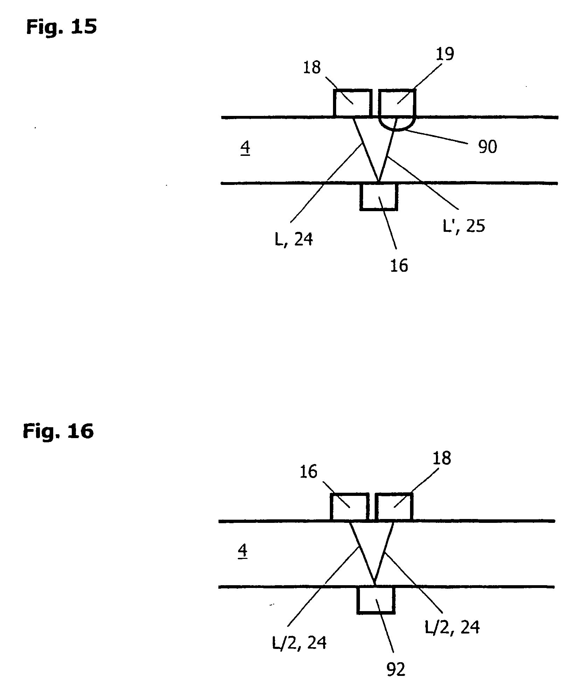

Bei den in Fig. 9 bis 15 gezeigten Ausführungsformen wird ein Trübungssensor mit zwei Messstrecken 24 und 25 mit unterschiedlichen Längen L bzw. L' verwendet. Hierbei wird neben dem Sender 16 und dem Empfänger 18 ein weiterer Empfänger 19 verwendet, wobei der Empfänger 18 im Vergleich zu der in Fig. 3,5 und 6 gezeigten Anordnung in Richtung senkrecht zu der Längsachse des Kanals 4 (siehe Fig. 9 bis 14) oder parallel zu der Längsachse des Kanals 4 (siehe Fig. 15) verschoben positioniert ist. Der weitere Empfänger 19 ist in Richtung senkrecht zu der Längsachse des Fluidkanals 4 (siehe Fig. 9 bis 14) oder parallel zu der Längsachse des Fluidkanals 4 (siehe Fig. 15) benachbart zu dem Empfänger 18 angeordnet. Diese Anordnungen der Empfänger 18 und 19 dienen zur Veranschaulichung; die Empfänger 18 und 19 können beliebig angeordnet sein, solange gewährleistet ist, dass sie von dem Sender 16 ausgestrahltes Licht nach Durchgang durch den Kanal 4 erhalten.

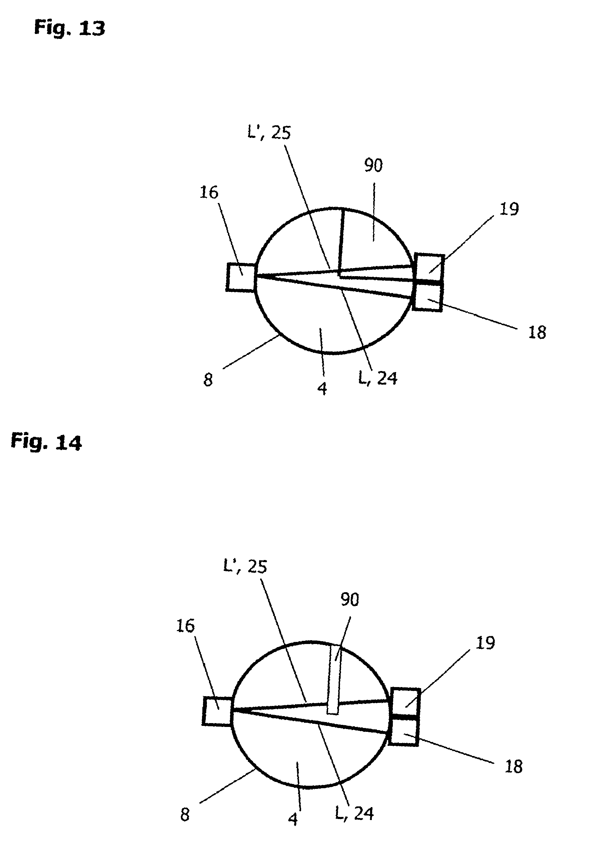

Mittels einer Struktur 90, die in Ausbreitungsrichtung des Lichts von der Senderdiode 16 zwischen dieser und dem Empfänger 19 angeordnet ist, ist die Messstrecke zwischen dem Sender 16 und dem Empfänger 19 verglichen mit der Messstrecke zwischen dem Sender 16 und dem Empfänger 18 variiert. Die Struktur 90 kann beispielsweise in Form eines in den Kanal 4 ragenden Stegs (Fig. 9 und 14), einer Wandverdickungen des zweiten Anschlusskörper 8 im Bereich des Empfängers 19 (nicht dargestellt) oder durch eine Struktur mit zumindest im Bereich des Empfängers 19 viertelkreisförmigen Querschnitt (siehe Fig. 13 und 15) bereitgestellt sein.

Bei der in Fig. 16 dargestellten Ausführungsform sind der Sender 16 und der Empfänger 18 benachbart zu einander auf einer Seite des Kanals 4 angeordnet. Um von dem Sender 16 abgegebene Strahlung nach ihrem Durchgang durch ein in dem Kanal 4 vorhandenes Fluid dem Empfänger 18 zuzuführen, ist gegenüberliegend an der Außenseite des Kanals 4 eine reflektierende Fläche 92 angeordnet. Diese Ausführungsform stellt verglichen mit den oben beschriebenen Ausführungsformen eine Messstrecke verdoppelter Länge, d.h. 2*L, bereit. Bei dieser Ausführungsform ist es ferner vorgesehen, wenigstens eine weitere Empfängerdiode (nicht gezeigt) benachbart zu der reflektierenden Fläche 92 anzuordnen, um z.B. eine Messstrecke der Länge L oder L' zu erhalten.

Bei den oben beschriebenen Ausführungsformen weist der Kanal 4 im Bereich des Messbereichs 50 einen im Wesentlichen konstanten Querschnitt bezüglich seiner Längsachse auf. Wie in Figur 3 zu sehen, umfasst der Kanal 4 wenigstens im Bereich des Messbereichs 50 abgeflachte Bereiche auf, die gegebenenfalls die Fenster 20 und 22 umfassen. Abweichend davon, ist es möglich, den Kanal 4 kreisförmig auszugestalten.

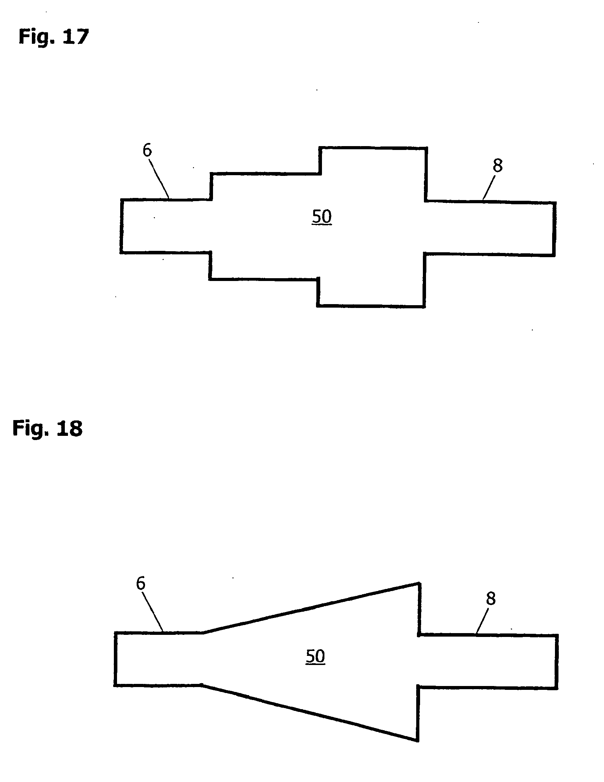

In Fig. 17 und 18 sind Ausführungsformen des Kanals 4 dargestellt, bei denen der Kanal 4 in seinem dem Messbereich 50 umfassenden Bereich unterschiedliche Querschnitte auf. Die Verwendung unterschiedlicher Querschnitte des Kanals im Bereich des Messbereichs 50 erlaubt es, das Strömungsverhalten von den Kanal 4 durchfließenden Fluids zu variieren, um beispielsweise unterschiedlich hohe Strömungsgeschwindigkeiten zu erzielen. Dies kann beispielsweise vorteilhaft sein, um unterschiedliche optische Eigenschaften zu ermitteln. Ein weiterer Vorteil der Verwendung unterschiedlicher Querschnitte des Kanals 4 in diesem Bereich besteht in der Möglichkeit, unterschiedlich lange Messstrecken zu verwenden, um beispielsweise mittels einer kurzen Messstrecke schnelle und mittels einer langen Messstrecke genaue Messungen bezüglich einer optischen Eigenschaft eines den Kanal 4 durchströmenden Fluids zu ermöglichen.

Bei Verwendung der Vorrichtung I und/oder der Vorrichtung II ist es insbesondere vorgesehen, diese zwischen Fluid zuführenden und Fluid abführenden Leitungen einer Waschmaschine oder Geschirrspülmaschine anzuordnen, die im zusammengebauten Zustand eine Bypass-Leitung bilden. Unter einer Bypass-Leitung ist insbesondere zu verstehen, dass diese Leitung ausschließlich dazu dient, Prozessfluid einer Sensoreinheit zur Erfassung wenigstens einer optischen Eigenschaft zuzuführen.

## Patentansprüche

1. Vorrichtung zur Anordnung einer Sensoreinheit mit optischen Komponenten (16, 18, 19) zur Erfassung wenigstens einer optischen Eigenschaft eines Mediums, mit:
- einem Anschlusshauptkörper (2), der einen ersten Anschlusskörper (6) zum Anschluss an eine das Medium zuführende Leitung und einen zweiten Anschlusskörper (8) zum Anschluss an eine das Medium abführende Leitung umfasst, der mit dem ersten Anschlusskörper (6) verbunden ist,
- einem Kanal (4) für das Medium, der sich in Längsrichtung durch den Anschlusshauptkörper (2) erstreckt, und
- einer Befestigungseinheit (10) für eine Sensoreinheit,
**dadurch gekennzeichnet, dass**
- die Befestigungseinheit (10) außen an dem Anschlusshauptkörper (2) angeordnet ist,
- der Anschlusshauptkörper (2) den Kanal (4) definiert, und
- der Anschiusshauptkörper wenigstens in den Bereichen, die die wenigstens eine Messstrecke definieren, für von der Sensoreinheit verwendete Strahlung durchlässig ist.

2. Vorrichtung nach Anspruch 1, bei der
- wenigstens der erste Anschlusskörper (6) einen ersten Anschlussbereich (26) oder der zweite Anschlusskörper (8) einen zweiten Anschlussbereich (38) aufweist, der abhängig von der daran anzuschließenden Leitung und unabhängig von der Messstrecke (24, 25) ausgebildet ist, und
- der Anschlusshauptkörper (2) im Bereich der Befestigungseinheit (10) für die Sensoreinheit wenigstens eine anschlussbereichsunabhängige Messstrecke (24, 25) definiert.

3. Vorrichtung nach Anspruch 2, bei der
der Anschlusshauptkörper (2) wenigstens zwei unterschiedliche anschlussbereichsunabhängige Messstrecken (24, 25) definiert.

4. Vorrichtung nach einem der vorherigen Ansprüche, bei der
- der erste Anschlusskörper (6) eine erste Verbindungsstruktur (28) aufweist, und
- der zweite Anschlusskörper (8) eine zweite Verbindungsstruktur (48) zur Wirkverbindung mit der ersten Verbindungsstruktur (28) aufweist, um den ersten Anschlusskörper (6) und den zweiten Anschlusskörper (8) miteinander zu verbinden.

5. Vorrichtung nach einem der vorhergehenden Ansprüche **gekennzeichnet durch**
- einen deckelartigen Bereich (54) der Halterung (52), der einen Aufnahmeraum (12) hinsichtlich wenigstens einer Umgebungseinflussgröße wenigstens teilweise abdichtet.

## Claims

1. Device for the arrangement of a sensor unit having optical components (16, 18, 19) for detection of at least one optical characteristic of a medium, comprising:
- a connector main body (2), which includes a first connector body (6) for connection to a conduit supplying the medium and a second connector body (8), which is connected with the first connector body (6), for connection to a conduit discharging the medium,
- a channel (4) for the medium, which extends longitudinally through the connector main body (2), and
- a mounting unit (10) for a sensor unit,
**characterized in that**
- the mounting unit (10) is arranged externally on the connector main body (2)
- the connector main body (2) defines the channel (4), and
- the connector main body is permeable to radiation employed by the sensor unit at least in the regions that define at least one measuring section.

2. Device according to claim 1, wherein:
- at least the first connector body (6) comprises a first connection region (26) or the second connector body (8) comprises a second connection region (38), which is formed dependent upon the conduit to which it is to be connected and independent of the measuring section (24, 25), and
- the connector main body (2), in the region of the mounting unit (10) for the sensor unit, defines at least one measuring section (24, 25) independent of the connection region.

3. Device according to claim 2, wherein:
the connector main body (2) defines at least two different measuring sections (24, 25) independent of the connection region.

4. Device according to any one of the preceding claims, wherein:
- the first connector body (6) comprises a first connecting structure (28), and
- the second connector body (8) comprises a second connecting structure (48) for operative connection with the first connecting structure (28), to connect the first connector body (6) and the second connector body (8) with one another.

5. Device according to any one of the preceding claims **characterized by**
- a cover-like region (54) of the bracket (52), which at least partially seals a receiving space (12) with respect to at least one environmental parameter of influence.

## Revendications

1. Dispositif pour l'agencement d'une unité de détection avec des composants optiques (16, 18, 19) pour la détection d'au moins une propriété optique d'un fluide, comprenant :
- un corps principal de branchement (2), qui comprend un premier corps de branchement (6) pour le raccordement à une conduite amenant le fluide et un second corps de branchement (8) pour le raccordement à une conduite évacuant le fluide, qui est relié au premier corps de branchement (6),
- un canal (4) pour le fluide, qui s'étend dans le sens longitudinal à travers le corps principal de branchement (2), et
- une unité de fixation (10) pour une unité de détection,
**caractérisé en ce que**
- l'unité de fixation (10) est disposée à l'extérieur sur le corps principal de branchement (2),
- le corps principal de branchement (2) définissant le canal (4), et
- le corps principal de branchement étant perméable pour le rayonnement utilisé par l'unité de détection au moins dans les zones qui définissent le au moins un tronçon de mesure.

2. Dispositif selon la revendication 1, sur lequel
- au moins le premier corps de branchement (6) présente une première zone de branchement (26) ou le second corps de branchement (8) présente une seconde zone de branchement (38) qui est conçue en fonction de la conduite à raccorder dessus et indépendamment du tronçon de mesure (24, 25), et
- le corps principal de branchement (2) définit au moins un tronçon de mesure (24, 25) indépendant de la zone de branchement dans la zone de l'unité de fixation (10) pour l'unité de détection.

3. Dispositif selon la revendication 2, dans lequel
le corps principal de branchement (2) définit au moins deux tronçons de mesure (24, 25) différents et indépendants de la zone de branchement.

4. Dispositif selon l'une quelconque des revendications principales, dans lequel
- le premier corps de branchement (6) présente une première structure de liaison (28), et
- le second corps de branchement (8) présente une seconde structure de liaison (48) pour la liaison active avec la première structure de liaison (28), afin de relier entre eux le premier corps de branchement (6) et le second corps de branchement (8).

5. Dispositif selon l'une quelconque des revendications précédentes, **caractérisé par**
- une zone (54) de type couvercle du support (52), qui étanchéifie au moins partiellement un espace de logement (12) en ce qui concerne au moins un paramètre d'influence d'environnement.
